# DEMANDE DE BREVET EUROPEEN

(11) **EP 2 161 646 A1**
(43) Date de publication de la demande: **10.03.2010**
(21) Numéro de dépôt: 09168996.8
(22) Date de dépôt: 31.08.2009
(51) Int. Cl.: G06F 1/16, A47G 1/14

(54) **Présentoir d'images numériques**

(30) Priorité: 05.09.2008 FR 0804865
(71) Demandeur: Parrot, 75010 Paris (FR)
(72) Inventeur: Caubel, Christine, 75014 PARIS (FR)
(74) Mandataire: Dupuis-Latour, Dominique

(57) **Abrégé**

Ce présentoir (10) comprend un boîtier aplati, sensiblement parallélépipédique, avec une face avant (14), une face arrière (18) et des faces latérales formant une tranche périphérique. Le boîtier loge un afficheur apte à produire une image sous forme d'une matrice de pixels, et des moyens processeurs de données et de pilotage de l'afficheur. Le boîtier comprend un carter (50) et une façade (96, 106) assemblés entre eux de manière démontable par un verrou (84) de solidarisation mécanique. La façade comprend un vitre frontale (106) et une pièce support (96). La vitre frontale s'étend de bord à bord sur la pièce support et est fixée à celle-ci de manière non démontable, et la pièce support comprend une fenêtre centrale et des éléments d'accrochage (102) du verrou de solidarisation (84).

## Description

L'invention concerne un présentoir d'images numériques, c'est-à-dire un dispositif autonome permettant d'afficher des photographies numériques sur un écran.

Un tel présentoir ou "cadre numérique" est par exemple décrit dans le WO 2007/015009 A2 (Seydoux) ou le US2008/0204359 A1 (Perception digital Ltd.). Il s'agit d'un produit grand public qui peut être acheté ou offert de la même manière qu'un cadre destiné à recevoir une photographie traditionnelle, extérieurement identique et destiné à être utilisé de la même façon, par exemple posé sur une table, une cheminée, un piano, etc.

Le WO 2007/015009 A2 précité décrit un tel cadre numérique conçu, entre autres, de manière à gommer l'aspect technologique du produit (à la différence de certains appareils perfectionnés proposés par exemple comme accessoires dans le domaine de la photographie numérique) afin de renforcer l'assimilation d'aspect et d'emploi avec les cadres traditionnels et permettre son intégration dans toutes sortes d'intérieurs comme un objet de décoration, bien plus qu'en tant qu'objet technologique.

Sur le plan de l'esthétique, la tendance actuelle est à l'absence de tout moyen de montage visible (logement de vis, etc.), non seulement en façade et sur les côtés, mais également au verso du produit. Or, du point de vue technique il peut être souhaitable de permettre un démontage du produit, par exemple pour permettre un *reworking*, c'est-à-dire une retouche ponctuelle en cas de défaut détecté en cours de fabrication.

La tendance stylistique va également dans le sens de boîtiers amincis, dont l'épaisseur réduite et le faible espace disponible conduisent à des difficultés de conception technique pour y loger tous les composants nécessaires sans compromis avec les exigences du *designer*.

Un autre élément important sur le plan de l'esthétique est le câble d'alimentation du cadre, qui a souvent tendance à dépasser sur le côté. Même quand il est caché derrière le cadre, le fait de manipuler le cadre notamment pour passer de l'orientation "portrait" à l'orientation "paysage" ou inversement a souvent pour effet de déplacer le câble, avec en plus le risque de reposer le support du cadre sur le câble et donc de déstabiliser l'ensemble.

Une autre difficulté, d'ordre plus technique, concerne le montage de l'afficheur, en tant que composant, à l'intérieur du cadre.

Du point de vue du fabricant du cadre, compte tenu notamment de la forte demande en afficheurs, il peut être prudent de s'approvisionner auprès de plusieurs sources. Malheureusement, d'un fournisseur à l'autre, les afficheurs ne sont pas tous mécaniquement compatibles entre eux, de sorte que les dimensions extérieures différentes et le calage de la surface visible posent des problèmes au fabricant du cadre pour adapter ces composants différents aux pièces du cadre qui supportent l'afficheur. Il serait souhaitable pour cela de disposer d'un système relativement flexible permettant, sans modification des pièces du cadre, de pouvoir recevoir des composants afficheurs provenant de fournisseurs différents, avec possibilité de compenser les différences mécaniques du composant apparaissant d'un fournisseur à l'autre.

Enfin, sur le plan de l'ergonomie, pour le réglage de l'appareil, la sélection des images à afficher, etc., il est nécessaire d'activer un certain nombre de fonctions et de faire des choix dans divers menus. En pratique, on constate que cette navigation dans les menus de réglage est assez malaisée et peu intuitive, d'où l'importance d'améliorer l'ergonomie du cadre, lorsqu'il s'agit de procéder à un certain nombre de réglages.

L'invention propose un présentoir d'images numériques ou "cadre numérique" permettant d'atteindre l'ensemble des buts ci-dessus.

Ce présentoir est du type général décrit dans le WO 2007/015009 A2 précité, c'est-à-dire qu'il comprend : un boîtier aplati, sensiblement parallélépipédique, avec une face avant, une face arrière et des faces latérales formant une tranche périphérique ; logé dans le boîtier, un afficheur apte à produire une image sous forme d'une matrice de pixels ; et des moyens processeurs de données et de pilotage de l'afficheur.

De façon caractéristique de la présente invention, le boîtier comprend un carter et une façade assemblés entre eux de manière démontable par un verrou de solidarisation mécanique, et a façade comprend un vitre frontale et une pièce support. La vitre frontale s'étend de bord à bord sur la pièce support et est fixée à celle-ci de manière non démontable, et la pièce support comprend une fenêtre centrale et des éléments d'accrochage du verrou de solidarisation.

Selon diverses caractéristiques subsidiaires préférentielles :
- le verrou comprend un coulisseau mobile entre une position de verrouillage et une position d'ouverture ;
- le verrou comprend un organe de commande accessible par une trappe ménagée dans une paroi du boîtier ;
- le présentoir comprend en outre des moyens support pour le montage de l'afficheur dans le boîtier, ces moyens support comprenant un intercalaire en matériau élastomère encadrant le bord périphérique de l'afficheur ;
- l'afficheur est décentré par rapport à l'axe médian du boîtier, de manière à ménager latéralement à l'intérieur du boîtier un intervalle du côté opposé au décentrement, et l'afficheur décentré comprend une surface active avec une zone d'affichage centrée par rapport à l'axe médian du boîtier, et une zone inutilisée attenante située du côté du décentrement de l'afficheur ;
- en particulier, dans ce dernier cas, lorsque le présentoir comprend un connecteur couplé aux moyens processeurs et comportant un réceptacle apte à recevoir un support amovible de données numériques enfichable depuis l'extérieur du boîtier selon une direction d'enfichage, le connecteur peut être logé dans l'espace défini par ledit intervalle ménagé du côté opposé au décentrement de l'afficheur ;
- le présentoir comprend une béquille de maintien faisant saillie de la face arrière du boîtier avec une extrémité distale formant point d'appui, ce point d'appui définissant avec un côté de la tranche du boîtier un polygone de sustentation permettant de maintenir le boîtier en position redressée lorsque le présentoir est posé sur une surface support, et la béquille est une tige rigide s'étendant perpendiculairement à la face arrière du boîtier et solidarisée à celle-ci en un point d'ancrage situé dans une région d'angle du boîtier ;
- en particulier, dans ce dernier cas, lorsque le présentoir comprend un connecteur couplé aux moyens processeurs et comportant un réceptacle apte à recevoir un support amovible de données numériques enfichable depuis l'extérieur du boîtier, le connecteur est disposé au voisinage du point d'ancrage de la tige rigide, dans ladite région d'angle du boîtier ;
- la tige rigide de la béquille peut être creuse et traversée axialement de part en part par un fil d'alimentation, avec sortie de fil par l'extrémité distale de la tige ;
- le présentoir comprend en outre sur la face arrière du boîtier des boutons de commande disposés selon une configuration homologue de zones correspondantes d'une interface graphique présentée sur l'afficheur du côté de la face avant du boîtier.

On va maintenant décrire un exemple de réalisation du cadre numérique de l'invention, en référence aux dessins annexés où les mêmes références désignent d'une figure à l'autre des éléments identiques ou fonctionnellement semblables.

La Figure 1 est une vue perspective, de trois-quarts face, d'un cadre numérique selon l'invention.

La Figure 2 est une vue perspective, de trois-quarts arrière, du cadre de la Figure 1.

La Figure 3 illustre, isolément, le carter dans lequel seront ultérieurement disposés les éléments successifs constituant le cadre de l'invention, au cours du processus de fabrication.

La Figure 4 illustre ce même carter, après mise en place d'un certain nombre de composants, notamment l'afficheur, le connecteur et le verrou de fermeture.

La Figure 5 illustre, isolément, le verrou de fermeture représenté dans son contexte Figure 4.

La Figure 6 illustre, de dos, la façade du cadre, considérée isolément avant son montage sur le carter.

La Figure 7 est homologue de la Figure 4, après mise en place de la façade et avant collage de la vitre frontale.

Les Figures 8 et 9 sont des coupes transversales en élévation, respectivement selon VIII-VIII et IX-IX de la Figure 7, du cadre de l'invention après assemblage final, avec la vitre frontale en place.

La Figure 10 est une vue du câble d'alimentation et de la béquille de maintien du cadre considérés isolément, ces éléments étant également visibles dans leur contexte sur les vues des Figures 1 et 2.

La Figure 11 est une vue perspective d'un détail du cadre, en coupe, dans la région de la béquille-support et du connecteur USB.

La Figure 12 montre la configuration des boutons de commande, illustrant la manière d'optimiser l'ergonomie de l'interface de réglage du cadre.

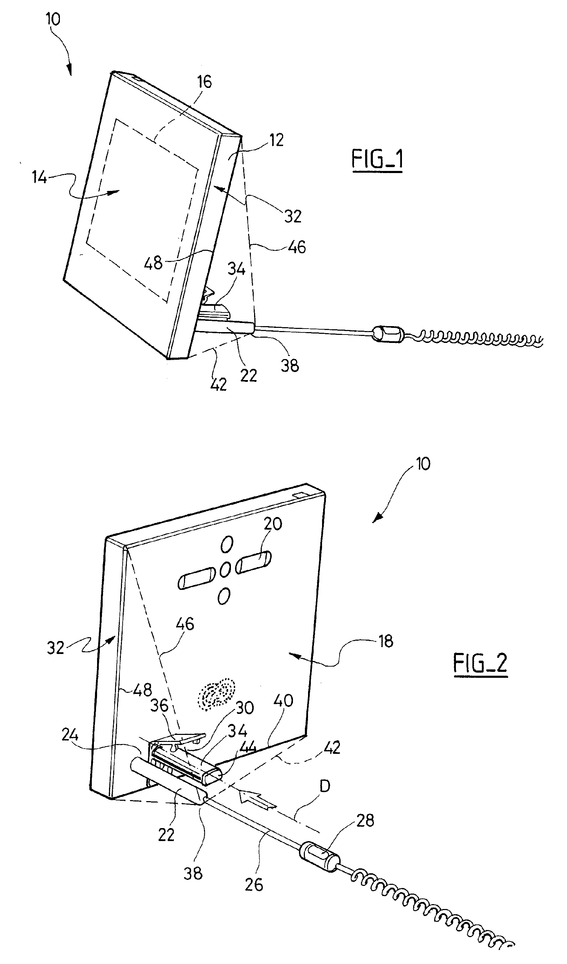

Les Figures 1 et 2 montrent, dans sa configuration extérieure générale, un présentoir d'images numériques selon l'invention.

Le présentoir d'images numériques ou "cadre numérique" 10 comprend un boîtier parallélépipédique aplati 12, avec une face avant 14 plane au travers de laquelle est visible l'image 16 produite par un afficheur numérique.

D'une façon particulièrement esthétique, la face avant 14 peut être constituée d'une vitre plane s'étendant d'un bord à l'autre du cadre numérique, cette face avant étant collée et ne laissant paraître aucun mode de fixation. Dans la mesure où l'image affichable 16 est d'une dimension plus faible que celle de la vitre frontale qui s'étend de bord à bord, cette vitre peut être avantageusement réalisée en un matériau semi-transparent, par exemple de type miroir sans tain, de manière à ne laisser paraître l'image numérique 16 que lorsque l'afficheur est actif et émet de la lumière, la face avant se présentant comme un simple miroir en l'absence d'activation lumineuse de l'afficheur situé sous la vitre semi-transparente.

La face arrière 18 du cadre, visible sur la Figure 2, porte des boutons de commande 20, par exemple pour ajuster divers paramètres tels que la vitesse de défilement, le mode de transition entre images, l'extinction automatique, etc.

Lorsque le cadre est posé sur un support (table, etc.), il est prévu une béquille de maintien 22, par exemple une tige cylindrique fixée ou emboîtée dans une région d'angle inférieur 24 de la face arrière, afin de maintenir le boîtier du cadre en position redressée, légèrement inclinée.

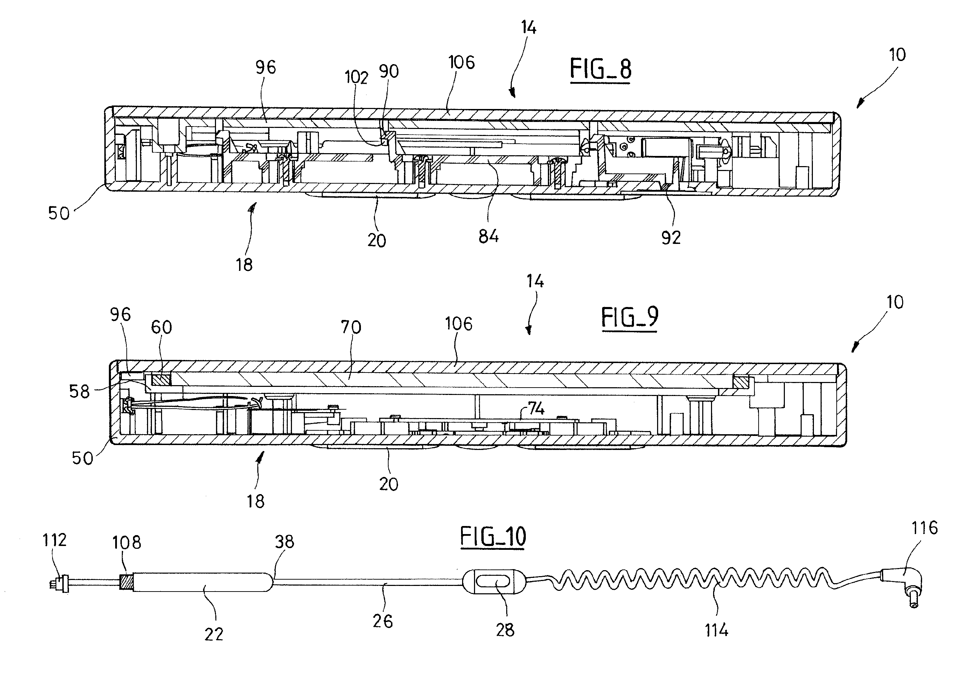

Il est par ailleurs prévu un fil d'alimentation 26 pourvu d'un interrupteur 28, relié aux circuits électroniques du cadre. Avantageusement, le fil d'alimentation 26 traverse la béquille de maintien 22 axialement de part en part, la sortie du fil ayant lieu par l'extrémité distale de la béquille 22 (cet aspect sera évoqué plus en détail en référence à la description de la Figure 10).

Le cadre est par ailleurs pourvu d'un connecteur, par exemple de type USB, pour permettre l'enfichage d'un support de données amovible de type "clef USB", ou le branchement d'un câble de liaison à un ordinateur, disque dur de stockage d'images, etc. afin de transférer vers le cadre des fichiers contenant des données d'images à afficher. On notera incidemment que la référence à un port de type "USB" n'est aucunement limitative et n'est donnée qu'à titre d'exemple, le problème étant le même quel que soit le standard de connexion : Compact Flash, SD card, FireWire, etc..

Avec les cadres numériques classiques, ce connecteur est généralement placé sur la tranche périphérique 32 et constitue un élément rapporté saillant particulièrement visible et très inesthétique, à plus forte raison dans le cas d'une clef USB de forme allongée et proéminente, surtout si elle est d'une couleur contrastant avec celle du cadre).

À l'opposé, dans le cas du cadre de l'invention ce connecteur 30 est placé dans la région d'angle inférieur 24 qui est celle où se trouve la béquille, et de plus la direction d'enfichage D est perpendiculaire à la surface de la face arrière 18. Lorsque le connecteur 30 n'est pas utilisé, un volet de fermeture 36 permet d'occulter la trappe où se trouve le réceptacle du connecteur USB. Cette configuration où le connecteur USB se trouve à proximité de la béquille, de préférence à un niveau situé légèrement plus haut que celle-ci, permet que, une fois enfichée, la clef USB 34 soit très peu visible de l'extérieur, quelle que soit la position du cadre, horizontale (comme illustré sur les Figures 1 et 2) ou verticale (c'est-à-dire avec une rotation de 90° par rapport à celle illustrée sur les Figures, avec la béquille reposant toujours sur la surface support).

Lorsque l'utilisateur souhaite utiliser le connecteur, il ouvre le volet 36 et enfiche la clef USB 34 en suivant la direction D perpendiculaire à la face arrière 18. Dans la position illustrée (position horizontale du cadre), l'extrémité distale 38 de la béquille 22 et l'arête 40 de la face arrière reposant sur la surface support définissent ensemble un polygone de sustentation 42, tel que l'extrémité distale de la clef USB 44, quel que soit le modèle de clef utilisé, ne s'étende pas au-delà de ce polygone (triangle) 42. Il en est de même lorsque le cadre est tourné d'un quart de tour (position verticale), le polygone 46 étant alors défini par l'extrémité distale 38 de la béquille 22 et l'arête 48 de la tranche périphérique 32. Cette configuration, avec une béquille 22 d'une longueur suffisante et une légère inclinaison du cadre, permet de loger la clef USB dans une "zone morte" de la face arrière, de toute façon non utilisée, de sorte que la clef n'est jamais une gêne, quel que soit l'endroit où le cadre est posé, sur une table, contre un mur, etc. De plus, lorsque l'on est face au cadre, ou légèrement de côté, la position du connecteur 30, à proximité de la béquille 22 et légèrement vers l'intérieur du cadre, fait que la clef USB n'est pas visible, et ceci que le cadre soit en position verticale ou bien horizontale, configuration particulièrement avantageuse sur le plan de l'esthétique - à la différence des cadres numériques traditionnels avec un connecteur disposé sur la tranche, où la clef USB dépasse du cadre, ce qui est particulièrement inesthétique.

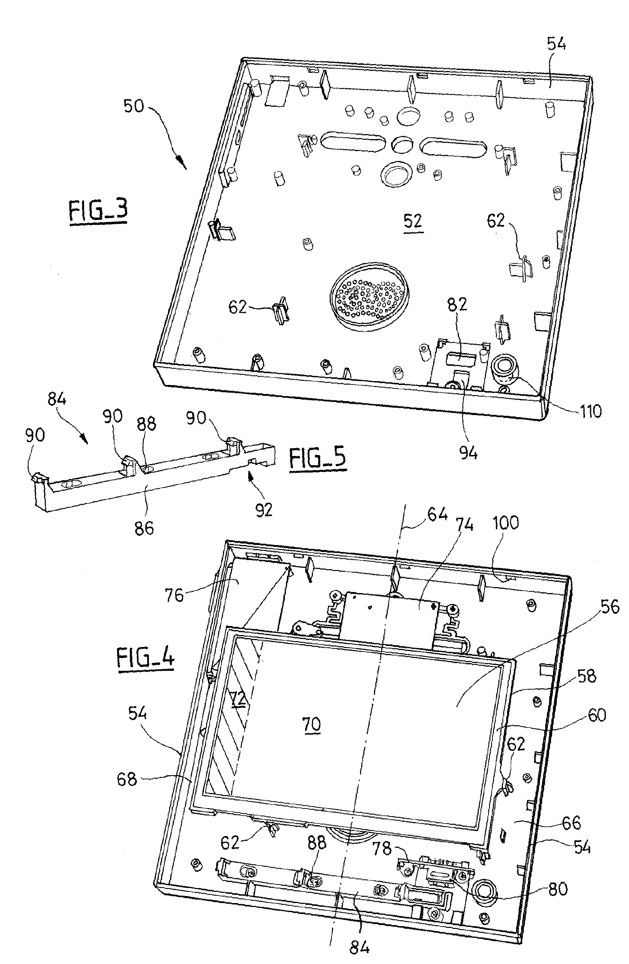

On va maintenant décrire, en référence aux Figures 3-9 et 11, la structure interne du cadre numérique que l'on vient de décrire, et la manière dont celui-ci est assemblé.

La pièce de base présentée isolément Figure 3 est un carter 50 destiné à recevoir les différents composants du cadre. Ce carter comprend une paroi de fond 52 correspondant à la face arrière 18 du cadre, et des parois latérales 54 formant la tranche 32 de celui-ci.

Comme illustré Figure 4, le carter 50 reçoit un afficheur 56, de type écran LCD par exemple. L'une des difficultés tient au fait que les afficheurs produits par des fournisseurs différents ne sont pas tous mécaniquement compatibles entre eux et peuvent varier légèrement en ce qui concerne leurs dimensions extérieures et le centrage de la zone d'affichage. Pour faciliter l'intégration d'afficheurs provenant de différentes sources, l'invention prévoit de monter l'afficheur 56 sur le carter 50 au moyen d'un cadre rigide périphérique 58 avec interposition d'un intercalaire souple 60. L'intercalaire 60 est par exemple réalisé en un élastomère telle qu'une silicone, et ses cotes sont adaptées à chaque type d'afficheur produit par un fournisseur donné. Dans la mesure où les délais de fabrication et de mise au point des outillages pour la fabrication de pièces élastomères sont très courts et que le coût de fabrication de ces pièces n'est pas très élevé (en comparaison des pièces en matière plastique rigide), il devient facile d'adapter le cadre numérique en fonction des dimensions extérieures d'un l'afficheur provenant de telle ou telle source d'approvisionnement. De plus, la déformabilité de l'intercalaire 60 permet de combler aisément les jeux pouvant affecter les afficheurs. Le cadre extérieur 58, quant à lui, repose sur des pieds verticaux 62 moulés sur la paroi de fond 52 du carter 50 et faisant saillie de celle-ci, pour assurer le calage en hauteur de l'afficheur porté par l'intercalaire élastomère 60 jusqu'à un niveau où cet afficheur 70 vient sensiblement affleurer le rebord périphérique de la paroi latérale 54 (à l'épaisseur de la vitre frontale près, comme cela est plus précisément visible sur les coupes des Figures 8 et 9).

Une autre difficulté tenant à la nature des écrans LCD couramment disponibles est le fait que ces écrans sont plutôt des écrans de proportion 16/9, donc relativement allongés. Ces écrans longs peuvent être problématiques pour le placement des composants tels que des connecteurs USB, qui occupent la majeure partie de l'épaisseur d'un cadre lorsque celui-ci est très plat. D'autre part, les photos présentées sur un cadre numérique sont rarement au format 16/9 ou approchant, mais plutôt d'un format moins allongé, avec des proportions de type 4/3 ou 3/2.

De façon caractéristique de l'invention, pour tenir compte de cette problématique, l'afficheur 56 est décalé sur le côté par rapport à l'axe médian 64 du carter 50 (et donc du cadre proprement dit). Il subsiste ainsi par rapport à la paroi latérale 54 un intervalle 66 plus large que du côté opposé (intervalle 68). D'autre part, une partie seulement de la surface de l'afficheur est utilisée pour présenter l'image numérique, cette surface étant divisée entre, d'une part, une zone d'affichage utile 70 centrée par rapport à l'axe médian 64 et, d'autre part, une zone d'extrémité 72 décentrée, non utilisée, située du côté de l'intervalle plus étroit 68. L'afficheur sera bien entendu piloté de manière que l'affichage de l'image soit décentrée par rapport à totalité de la surface affichable de l'afficheur 56, mais centrée par rapport à la zone d'affichage utile 70, donc centrée pour l'utilisateur, par rapport à l'axe médian 64 du cadre.

Dans une forme de mise en oeuvre particulière (non illustrée), l'espace situé du côté de l'intervalle large 66, qui est laissé libre du fait du décentrement de l'afficheur 56, est utilisé pour loger le connecteur USB, dont l'intégration ne posera pas de difficulté même s'il occupe la quasi-totalité de l'épaisseur du cadre à cet endroit.

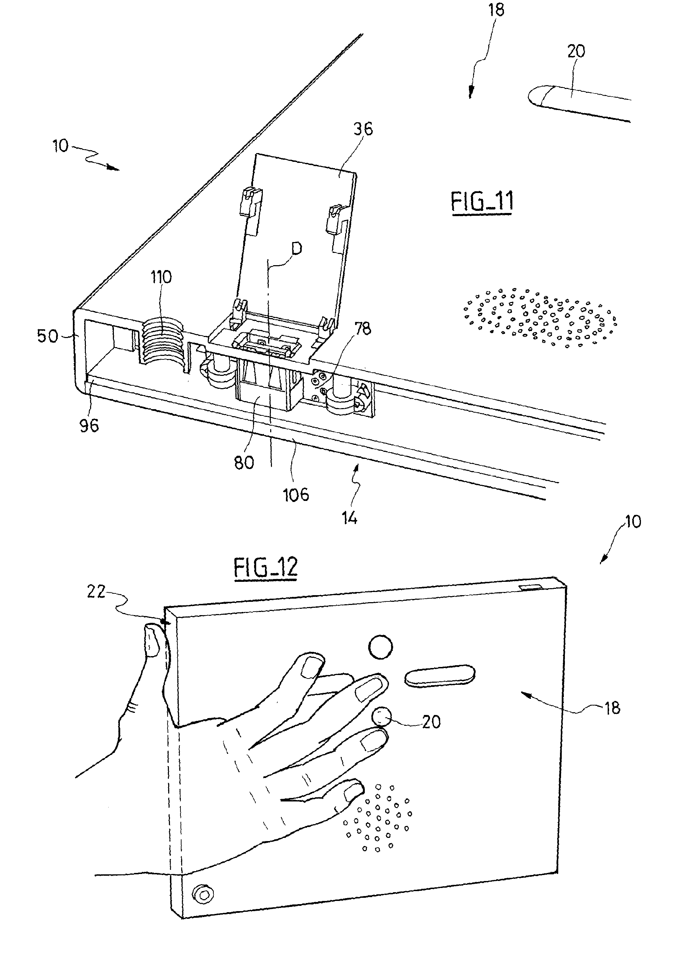

Outre l'afficheur 56, le carter 50 reçoit un certain nombre d'éléments tels que des circuits imprimés 74, 76, ainsi que la plaquette 78 portant le connecteur USB proprement dit 80, accessible au travers d'un orifice 82 ménagé dans la paroi de fond 52 du carter (voir également la Figure 11).

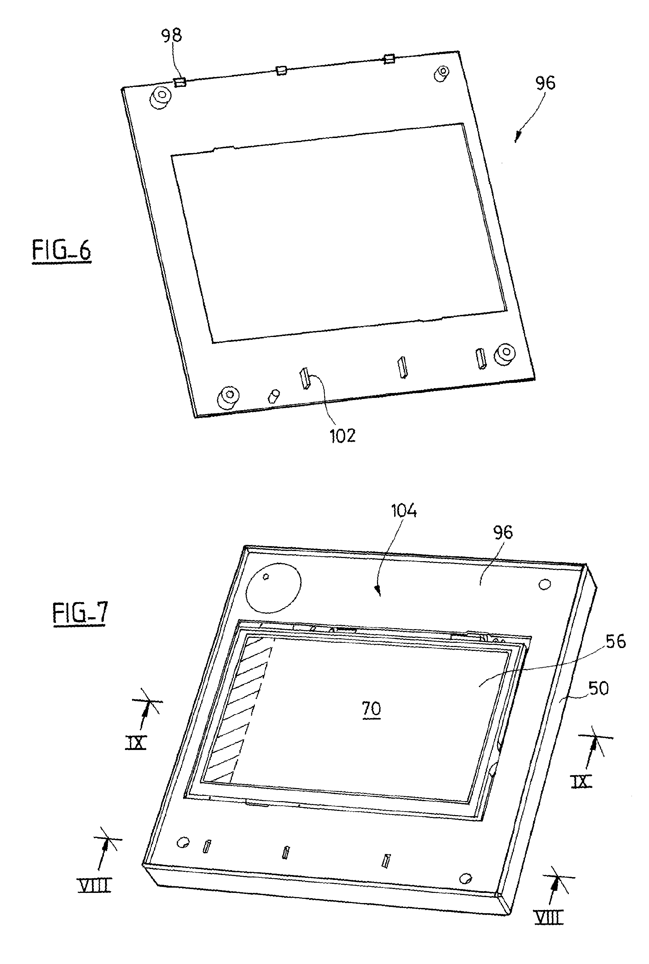

Le carter 50 comporte également un verrou mobile 84 servant à bloquer de manière démontable la pièce de façade venant fermer le carter, pièce que l'on décrira plus bas en référence aux Figures 6 et 7. Ce verrou 84 est constitué d'un coulisseau 86 fixé au carter 50 de manière à n'avoir qu'un seul degré de liberté en translation, entre deux positions (verrouillée ou déverrouillée). Le coulisseau 86, illustré isolément Figure 5, comporte à cet effet des trous oblongs 88 recevant des vis fixées au fond du carter ainsi que des griffes saillantes 90 servant à accrocher la pièce de fermeture qui sera disposée sur le carter. Du côté opposé, c'est-à-dire du côté en contact avec la paroi de fond 52 du carter 50, le coulisseau 86 est manoeuvré au travers d'une ouverture 94 ménagée dans la paroi de fond 52 à proximité de l'ouverture 82 d'accès au connecteur USB. Une encoche 92 ménagée dans le coulisseau est adaptée à la trappe de fermeture de l'ouverture 82, qui verrouille ainsi le coulisseau en position fermée.

La pièce de fermeture 96, illustrée Figure 6, comporte sur l'un de ses côtés des ergots 98 destinés à se loger dans des encoches homologues 100 (visibles Figure 4) ménagées sur le carter. Côté opposé, la pièce de fermeture 96 comporte un réceptacle 102 destiné à recevoir les griffes 90 du coulisseau 86 (la configuration inverse étant également envisageable, avec des griffes formées sur la pièce 96 et des logements sur le coulisseau 86). Il est bien entendu prévu une large ouverture centrale pour ne pas occulter l'afficheur.

Les Figures 7 à 9 illustrent le carter tel qu'il se présente, équipé de ses divers composants, après mise en place de la pièce de fermeture 96. Ce montage est opéré par insertion des ergots 98 dans les logements 54, rabattage de la pièce 96 contre le carter et verrouillage en position de ces deux éléments par coulissement du verrou 84, dont les griffes 90 viennent se placer dans les logements 102. Le coulissement du verrou 84 est opéré au travers de l'ouverture 94 par un élément saillant permettant de manipuler le système de commande de verrouillage 92.

La face frontale, apparente 104 de la pièce de fermeture 96 comporte une fenêtre dont les dimensions minimales correspondent à celles de la zone affichable 70 de l'afficheur 56. Par ailleurs, cette face 104 est une face plane sur laquelle est collée une vitre frontale 106 (illustrée en coupe sur les Figures 8 et 9) s'étendant d'un bord à l'autre de la pièce 96, et donc d'un bord à l'autre du carter 50. Cette vitre 106 est fixée de manière non démontable à la pièce de fermeture 96, et son montage n'est pas apparent, pour des raisons esthétiques évidentes. Le système de verrouillage réversible au moyen du coulisseau 84 n'empêche cependant pas la réouverture du boîtier, notamment dans une hypothèse où en fin de chaîne de fabrication, après un test de qualité, il y aurait lieu d'ouvrir le boîtier qui vient d'être assemblé afin d'opérer un *reworking* (retouche), qui ne posera pas de difficulté particulière dans la mesure où la façade, constituée de la pièce de fermeture 96 et de la vitre frontale 106 collée sur celle-ci, peut être aisément désolidarisée du carter 50 et donc du reste du boîtier.

La Figure 10 illustre plus en détail la manière dont est réalisée la sortie du câble d'alimentation du cadre numérique, qui requiert une alimentation électrique et donc un câble d'alimentation pour le branchement à un bloc secteur. Afin de préserver l'aspect esthétique général du produit, la sortie de câble est opérée par la face arrière 18, comme on peut le voir sur la Figure 2. Mais, dans la mesure où sur cette même face se trouve la béquille de maintien 22, lorsque l'on manipule le cadre ou qu'on le tourne pour passer d'une orientation "portrait" à une orientation "paysage", le risque existe de reposer la béquille sur le câble et donc de déstabiliser l'ensemble. Pour éviter cet inconvénient, le câble traverse complètement la béquille, qui est réalisée sous forme d'un tube creux ouvert de part en part. L'extrémité proximale 108 de la béquille 22 vient s'emboîter ou se visser dans un orifice taraudé 110 (Figures 3 et 11) dans la région d'angle 24, et les diamètres respectifs de l'orifice traversant de la béquille et celui du câble sont choisis de manière à permettre le coulissement et la rotation libre de la béquille par rapport au câble au moment du montage. Dans la région de la béquille le câble 26 est un câble droit, terminé par une prise 112 à enficher ou à souder dans un connecteur approprié interne du cadre, cette connexion étant réalisée une fois pour toutes lors de l'assemblage du cadre. Au voisinage de la béquille 22, le câble est droit, mais dans une région plus éloignée, par exemple au-delà de l'interrupteur 28, il peut être torsadé, comme illustré en 114. L'extrémité distale du câble comporte un connecteur 116 à brancher sur un bloc secteur approprié.

Dans une variante de réalisation de la béquille, celle-ci comporte sur toute sa longueur une gorge mettant en communication avec l'extérieur l'orifice axial recevant le câble. La dimension en section droite de cette gorge est légèrement inférieure au diamètre du câble de manière que celui ne puisse s'échapper de la gorge une fois inséré dans cette dernière. Ainsi, la béquille peut tourner autour du câble pour présenter le même esthétisme quelque soit la position du cadre (portrait ou paysage), et d'autre part elle peut être complètement séparée du câble (sans qu'il soit nécessaire de dissocier le câble du boîtier) de manière à permettre notamment un accrochage mural du cadre.

Dans cette variante, la béquille est avantageusement réalisée en un matériau ferreux, et elle est maintenue au boîtier par un aimant annulaire, complété d'un tore élastique : la béquille, attirée par l'aimant, ne peut plus être translatée horizontalement, tandis que le tore aide à minimiser les jeux et donne une sensation de frottement lors de l'insertion, pour une sensation de qualité. La béquille se retire ainsi d'une simple traction exercée par l'utilisateur, et elle peut tourner autour de son axe pour que la gorge soit positionnée à l'endroit désiré et ne soit plus visible.

La Figure 12 illustre enfin un autre aspect de l'invention, qui est celui de l'amélioration générale de l'ergonomie des boutons de commande.

De façon classique, les réglages se font au moyen d'une interface graphique affiché sur l'écran, du côté de la face avant 14. La navigation dans cet interface graphique est opérée par des boutons 20, situés du côté de la face arrière 18. De façon caractéristique de l'invention, les zones de sélection des menus affichés sur l'écran le sont au même niveau que les boutons de sélection correspondants disposés sur la face arrière, de sorte qu'il suffira à l'utilisateur, sans regarder la face arrière, de déplacer son index ou son majeur en vis-à-vis du bouton (face arrière) correspondant à la zone en question affichée en vis-à-vis de l'autre côté du cadre (face avant).

Avec une disposition telle que celle illustrée (pavé comportant un bouton central et quatre boutons haut, bas, droite, gauche), éventuellement avec des formes différentes pour certains des boutons, il est aisé pour l'utilisateur de localiser le bouton central, puis de se déplacer ensuite très facilement vers les autres boutons, de manière très intuitive et sans avoir à regarder les boutons. Les divers boutons sont en outre positionnés dans une région de la face arrière 18 choisie de manière que lorsque l'utilisateur, comme illustré Figure 12, vient mettre son pouce en appui contre la tranche 22, les cinq boutons se placer naturellement à portée de son index ou de son majeur. L'utilisateur n'a pas besoin de toucher la face avant du cadre (à la différence des écrans tactiles par exemple) et donc ne laisse sur la vitre frontale aucune trace de doigt visible, seul le pouce appuyant sur la tranche du cadre.

## Revendications

1. Un présentoir d'images numériques (10), comprenant :
- un boîtier aplati, sensiblement parallélépipédique, avec une face avant (14), une face arrière (18) et des faces latérales formant une tranche périphérique (32) ;
- logé dans le boîtier, un afficheur (56) apte à produire une image sous forme d'une matrice de pixels ; et
- des moyens processeurs de données et de pilotage de l'afficheur ; présentoir **caractérisé en ce que :**
- le boîtier comprend un carter (50) et une façade (96, 106) assemblés entre eux de manière démontable par un verrou (84) de solidarisation mécanique (90, 102), et
- la façade comprend un vitre frontale (106) et une pièce support (96), la vitre frontale s'étendant de bord à bord sur la pièce support et étant fixée à celle-ci de manière non démontable, et la pièce support comprenant une fenêtre centrale et des éléments d'accrochage (102) du verrou de solidarisation (84).

2. Le présentoir de la revendication 1, dans lequel le verrou (84) comprend un coulisseau (86) mobile entre une position de verrouillage et une position d'ouverture.

3. Le présentoir de la revendication 1, dans lequel le verrou (84) comprend un organe de commande (92) accessible par une trappe (94) ménagée dans une paroi du boîtier.

4. Le présentoir de la revendication 1, comprenant en outre des moyens support pour le montage de l'afficheur (56) dans le boîtier, ces moyens support comprenant un intercalaire en matériau élastomère (60) encadrant le bord périphérique de l'afficheur.

5. Le présentoir de la revendication 1, dans lequel :
- l'afficheur (56) est décentré par rapport à l'axe médian (64) du boîtier, de manière à ménager latéralement à l'intérieur du boîtier un intervalle (66) du côté opposé au décentrement, et
- l'afficheur décentré (56) comprend une surface active avec une zone d'affichage (70) centrée par rapport à l'axe médian (64) du boîtier, et une zone inutilisée attenante (72) située du côté du décentrement de l'afficheur.

6. Le présentoir de la revendication 5, dans lequel :
- le présentoir comprend un connecteur (30) couplé aux moyens processeurs et comportant un réceptacle apte à recevoir un support amovible de données numériques (34) enfichable depuis l'extérieur du boîtier selon une direction d'enfichage (D), et
- le connecteur est logé dans l'espace défini par ledit intervalle (66) ménagé du côté opposé au décentrement de l'afficheur.

7. Le présentoir de la revendication 1, dans lequel :
- le présentoir comprend une béquille de maintien (22) faisant saillie de la face arrière du boîtier avec une extrémité distale (38) formant point d'appui, ce point d'appui définissant avec un côté (40) de la tranche du boîtier un polygone de sustentation (42) permettant de maintenir le boîtier en position redressée lorsque le présentoir est posé sur une surface support, et
- la béquille (22) est une tige rigide s'étendant perpendiculairement à la face arrière du boîtier et solidarisée à celle-ci en un point d'ancrage (110) situé dans une région d'angle (24) du boîtier.

8. Le présentoir de la revendication 7, dans lequel:
- le présentoir comprend un connecteur (30) couplé aux moyens processeurs et comportant un réceptacle apte à recevoir un support amovible de données numériques (34) enfichable depuis l'extérieur du boîtier, et
- le connecteur (30) est disposé au voisinage du point d'ancrage (110) de la tige rigide, dans ladite région d'angle (24) du boîtier.

9. Le présentoir de la revendication 8, dans lequel la tige rigide de la béquille (22) est creuse et traversée axialement de part en part par un fil d'alimentation (26), avec sortie de fil par l'extrémité distale (38) de la tige.

10. Le présentoir de la revendication 1, comprenant en outre sur la face arrière (18) du boîtier des boutons de commande (20) disposés selon une configuration homologue de zones correspondantes d'une interface graphique présentée sur l'afficheur du côté de la face avant (14) du boîtier.
